# EUROPÄISCHE PATENTSCHRIFT

(11) **EP 4 586 796 B1**
(45) Veröffentlichungstag und Bekanntmachung des Hinweises auf die Patenterteilung: **25.11.2026**
(21) Anmeldenummer: 23776564.9
(22) Anmeldetag: 08.09.2023
(51) Int. Cl.: A01C 5/06, A01C 7/20

(54) **LANDWIRTSCHAFTLICHES BODENBEARBEITUNGSGERÄT**
AGRICULTURAL TILLAGE IMPLEMENT
OUTIL AGRICOLE DE TRAVAIL DU SOL

(30) Priorität: 15.09.2022 DE 102022123565
(43) Veröffentlichungstag der Anmeldung: 23.07.2025
(73) Patentinhaber: Lemken GmbH & Co KG, 46519 Alpen (DE)
(72) Erfinder: VAN KANN, Andreas, 53949 Dahlem (DE)
(86) Internationale Anmeldenummer: PCT/DE2023/100668
(87) Internationale Veröffentlichungsnummer: WO 2024/056128

(56) Entgegenhaltungen:
- EP-B1- 0 858 258
- DE-A1- 19 644 751
- DE-A1- 19 852 609

## Beschreibung

Die vorliegende Erfindung betrifft ein landwirtschaftliches Bodenbearbeitungsgerät gemäß dem Oberbegriff des Anspruches 1.

Ein landwirtschaftliches Bodenbearbeitungsgerät der eingangs genannten Art ist aus der DE 196 44 751 A1 bekannt. Das als Sämaschine ausgeführte landwirtschaftliches Bodenbearbeitungsgerät umfasst einen höhenverstellbaren Träger, an welchem zumindest eine Bodenbearbeitungseinheit, welche ein Bodenbearbeitungswerkzeug sowie ein zum Bodenbearbeitungswerkzeug benachbart angeordnetes Tiefenführungsmittel aufweist, mittels eines Viergelenkgetriebes angeordnet ist. Der Träger ist mittels eines weiteren einen Oberlenker und einen Unterlenker umfassenden Lenkergetriebes an einem Rahmen des Bodenbearbeitungsgerätes angelenkt. Zumindest das Viergelenkgetriebe, welches die Bodenbearbeitungseinheit mit dem Träger verbindet, ist in Fahrtrichtung des Bodenbearbeitungsgerät konvergierend ausgeführt. Die Lage von Oberlenker und Unterlenker des Lenkergetriebes zueinander ist zwischen einer parallelen Anordnung und einer konvergierenden Anordnung verstellbar. Durch eine Höhenverstellung des Lenkergetriebes lässt sich eine Tiefeneinstellung des Bodenbearbeitungswerkzeugs durch eine Kippbewegung des Trägers um seine Längsachse erreichen. Die gemäß dem Stand der Technik vorgeschlagene Anordnung des zusätzlichen Lenkergetriebes, mit welchem die Bodenbearbeitungseinheit mittelbar an dem Rahmen angeordnet ist, unterhalb eines auf dem Rahmen angeordneten Behälters, ist wegen des zusätzlichen Bauraumbedarfs ungünstig.

Ausgehend vom vorstehend genannten Stand der Technik liegt der Erfindung die Aufgabe zugrunde, ein landwirtschaftliches Bodenbearbeitungsgerät der eingangs genannten Art weiterzubilden, welche die Nachteile des Standes der Technik vermeidet, insbesondere sich durch einen reduzierten Bauraumbedarf und eine präzisere und komfortablere Verstellung auszeichnet.

Diese Aufgabe wird durch ein landwirtschaftliches Bodenbearbeitungsgerät mit den Merkmalen des unabhängigen Patentanspruchs 1 gelöst. Vorteilhafte Ausführungsformen und Weiterbildungen sind den hiervon abhängigen Ansprüchen zu entnehmen.

Gemäß dem Anspruch 1 wird ein landwirtschaftliches Bodenbearbeitungsgerät vorgeschlagen, umfassend einen höhenverstellbaren Träger, an welchem zumindest eine Bodenbearbeitungseinheit, welche zumindest ein Bodenbearbeitungswerkzeug sowie ein zum Bodenbearbeitungswerkzeug benachbart angeordnetes Tiefenführungsmittel aufweist. Die zumindest eine Bodenbearbeitungseinheit ist mittels eines Viergelenkgetriebes an dem Träger angeordnet, wobei der Träger mittels eines einen Oberlenker und einen Unterlenker umfassenden Lenkergetriebes an einem Rahmen des Bodenbearbeitungsgerätes angelenkt ist. Erfindungsgemäß ist vorgesehen, dass am Träger ein Lenker angeordnet ist, welcher sich abschnittsweise in Richtung des Tiefenführungsmittels erstreckt, wobei der Lenker an seinem freien Ende einen im Aufstandsbereich des Tiefenführungsmittels liegenden Gelenkpunkt aufweist, in dem ein Koppelelement mit einem Ende angelenkt ist, wobei das Koppelelement mit seinem anderen Ende in einem oberhalb des Gelenkpunktes des Lenkers beabstandet angeordneten Gelenkpunkt angelenkt ist, welcher relativ zu dem am Lenker angeordneten Gelenkpunkt ortsfest ist.

Wesentlich ist die Überlegung, im Aufstandsbereich oberhalb des Tiefenführungsmittels einen physischen Drehpunkt zu realisieren, um den die an dem Viergelenkgetriebe angeordnete Bodenbearbeitungseinheit auf einer Kreisbahn schwenkbar ist. Hierzu weist der Lenker an seinem freien Ende den im Aufstandsbereich des Tiefenführungsmittels liegenden Gelenkpunkt auf. Da ein singulärer Drehpunkt hinter dem zumindest einen Bodenbearbeitungswerkzeug eine geschobene Anordnung ergeben würde, ist das Koppelelement vorgesehen. Das Koppelelement verbindet den im Aufstandsbereich des Tiefenführungsmittels liegenden Gelenkpunkt mit dem oberhalb des Gelenkpunktes des Lenkers beabstandet angeordneten Gelenkpunkt, welcher relativ zu dem am Lenker angeordneten Gelenkpunkt ortsfest ist. Das Koppelelement nimmt dabei nur vertikale Kräfte auf.

Die räumliche Anordnung des Viergelenkgetriebes und des Lenkergetriebes erfolgt im Wesentlichen parallel zueinander, wobei das Lenkergetriebe und das Viergelenkgetriebe einander überlappend angeordnet sind. Das Lenkergetriebe erstreckt sich ausgehend vom Rahmen in Richtung der zumindest einen Bodenbearbeitungseinheit.

Insbesondere kann der Oberlenker des Lenkergetriebes mit einem Ende am Rahmen angelenkt und sich mit seinem gegenüberliegenden Ende innerhalb des Aufstandsbereichs bis oberhalb des Tiefenführungsmittels erstrecken, wobei der Lenker mit seinem rahmenseitigen Ende am Träger drehfest angeordnet ist.

Hierzu kann der relativ zu dem am Lenker angeordneten Gelenkpunkt ortsfeste Gelenkpunkt am Oberlenker angeordnet sein. Die Lage des Gelenkpunktes am Oberlenker, welcher um einen rahmenseitigen Gelenkpunkt schwenkbar ist, bleibt, auch bei einem Verschwenken, relativ zu dem am Lenker angeordneten Gelenkpunkt unverändert.

Gemäß einer alternativen Ausführung kann der Oberlenker des Lenkergetriebes als Vertikallenker ausgeführt sein, welcher mit einem Ende ortsfest am Rahmen angeordnet und mit seinem gegenüberliegenden Ende in einem Gelenkpunkt am Träger angelenkt ist. Der Lenker ist auch gemäß dieser Ausführung mit seinem rahmenseitigen Ende drehfest am Träger angeordnet. Bei dieser Ausführung kann der als Vertikallenker ausgeführte Oberlenker längenveränderlich ausgebildet sein. Hierzu kann der Vertikallenker als Linearaktor, beispielsweise als Spindel, Spindelmotor oder Hydraulikzylinder, ausgebildet sein.

Hierzu kann der relativ zu dem am Lenker angeordneten Gelenkpunkt ortsfeste Gelenkpunkt an einem sich in den Aufstandsbereich erstreckenden Abschnitt des Rahmens angeordnet sein. Dabei ist der gegenüber dem am Lenker angeordneten Gelenkpunkt ortsfeste Gelenkpunkt ortsfest am Rahmen anordnet.

Dabei kann der als Vertikallenker ausgeführte Oberlenker zur Einstellung einer Eingriffstiefe des Bodenbearbeitungswerkzeuges eingerichtet sein. Insbesondere die Ausführung als Linearaktor ermöglicht eine Einstellung der Eingriffstiefe des Bodenbearbeitungswerkzeuges, indem der Abstand des Trägers zum Boden durch eine Längenveränderung des Vertikallenkers erreicht wird.

Bevorzugt kann der Unterlenker einen rahmenseitigen Gelenkpunkt und einen trägerseitigen Gelenkpunkt aufweisen. Dem Unterlenker kann dabei die Funktion zukommen, Zugkräfte auf den Träger und die zumindest eine daran angeordnete Bodenbearbeitungseinheit zu übertragen.

Gemäß einer Weiterbildung kann zumindest ein Einstellmittel vorgesehen sein, welches zur Einstellung einer Eingriffstiefe des Bodenbearbeitungswerkzeuges und/oder zur Einstellung eines vom Bodenbearbeitungswerkzeug auf einen Boden auszuübenden Drucks eingerichtet ist. So kann durch das zumindest eine Einstellmittel bei einem als Sämaschine ausgeführten Bodenbearbeitungsgerät die Sätiefe und/oder ein Schardruck eingestellt werden.

Hierzu kann das zumindest eine Einstellmittel als Linearaktor ausgeführt sein. Dabei kann das Einstellmittel als Hydraulikzylinder, Spindel, Spindelmotor oder Linearmotor ausgeführt sein. Bei einer Ausführung als Spindel kann diese manuell oder automatisch betätigbar sein.

Insbesondere kann das Koppelelement längenveränderlich ausgeführt sein. Hierbei kann das Koppelelement als Hydraulikzylinder ausgeführt sein. Insbesondere kann das Koppelelement als doppeltwirkender Hydraulikzylinder ausgeführt sein.

Bevorzugt können in den Gelenkpunkten Gelenke mit zumindest einem Freiheitsgrad angeordnet sein. Die Gelenke können beispielsweise als Drehgelenk oder als Kugelgelenk ausgeführt sein.

Gemäß einer bevorzugten Weiterbildung können die in den Gelenkpunkten schwenkbar miteinander verbundenen Komponenten des Viergelenkgetriebes und des Lenkergetriebes jeweils voneinander lösbar ausgeführt sein.

Die vorliegende Erfindung wird nachstehend anhand von in den Zeichnungen dargestellten Ausführungsbeispielen näher erläutert, wobei sich gleiche Bezugszeichen auf gleiche oder ähnliche oder funktional gleiche Komponenten beziehen.

Es zeigen:
- Fig. 1: schematisch und exemplarisch ein landwirtschaftliches Bodenbearbeitungsgerät gemäß dem Stand der Technik;
- Fig. 2: schematisch und exemplarisch eine Seitenansicht einer Bodenbearbeitungseinheit eines erfindungsgemäßen landwirtschaftlichen Bodenbearbeitungsgerätes;
- Fig. 3: schematisch und exemplarisch eine Seitenansicht der Bodenbearbeitungseinheit gemäß Fig. 2 in einer abweichenden Arbeitsposition;
- Fig. 4: schematisch und exemplarisch eine Seitenansicht der Bodenbearbeitungseinheit gemäß Fig. 3 in einer hiervon weiter abweichenden Arbeitsposition;
- Fig. 5: schematisch und exemplarisch eine Seitenansicht einer weiteren Ausführungsform der Bodenbearbeitungseinheit;
- Fig. 6: schematisch und exemplarisch eine Seitenansicht der Bodenbearbeitungseinheit gemäß Fig. 5 in einer abweichenden Arbeitsposition; und
- Fig. 7: schematisch und exemplarisch eine Seitenansicht der Bodenbearbeitungseinheit gemäß Fig. 6 in einer hiervon weiter abweichenden Arbeitsposition.

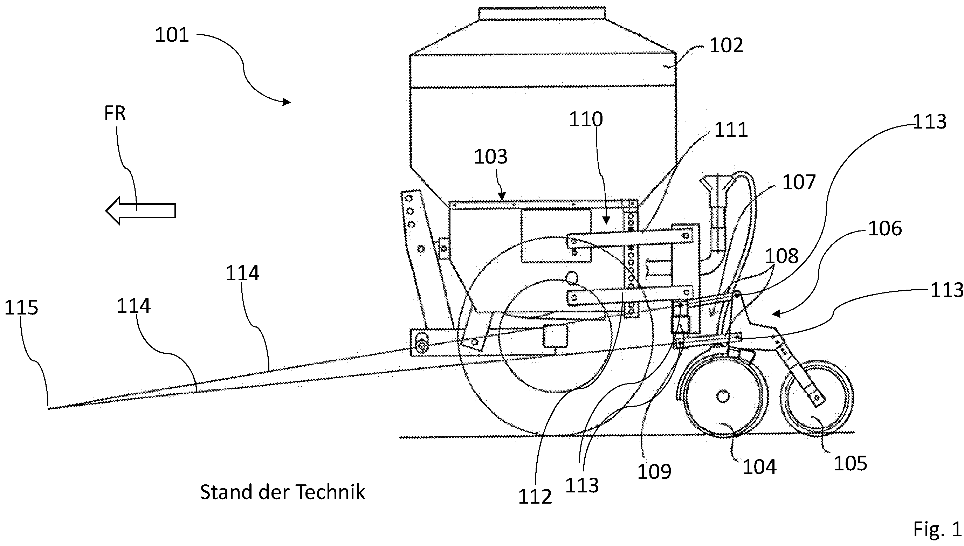

In Fig. 1 ist schematisch und exemplarisch ein als Drillmaschine ausgeführtes landwirtschaftliches Bodenbearbeitungsgerät 101 gemäß dem Stand der Technik dargestellt. Das Bodenbearbeitungsgerät 101 kann beispielsweise auch als Hackmaschine ausgeführt sein. Das Bodenbearbeitungsgerät 101 umfasst einen Saatgut und/oder Dünger aufnehmenden Behälter 102 und einen den Behälter 102 tragenden Rahmen 103. An dem Rahmen 103 ist eine Bodenbearbeitungseinheit 106 mittelbar angelenkt. Die Bodenbearbeitungseinheit 106 umfasst ein Bodenbearbeitungswerkzeug 104 sowie ein Tiefenführungsmittel 105. Gemäß der Darstellung in Fig. 1 handelt es sich bei dem Bodenbearbeitungswerkzeug 104 um ein Säschar und bei dem Tiefenführungsmittel 105 um eine Tiefenführungsrolle.

Die Bodenbearbeitungseinheit 106 ist durch ein Viergelenkgetriebe 107 mit Lenkern 108, die in Fahrtrichtung FR konvergierend angeordnet sind, mit einem Träger 109 verbunden. Der Träger 109 ist wiederum durch ein weiteres Lenkergetriebe 110 mit einem Oberlenker 111 und einem Unterlenker 112 mit dem Rahmen 103 des Bodenbearbeitungsgerätes 101 verbunden.

Die Lenker 108 weisen jeweils zwei endseitige Gelenkpunkte 113 auf, an denen der jeweilige Lenker 108 am Träger 109 bzw. an einem Rahmenelement der Bodenbearbeitungseinheit 106 angelenkt ist. Durch die beiden Gelenkpunkte 113 des jeweiligen Lenkers 108 verlaufende Hilfslinien 114 weisen aufgrund ihrer in Fahrtrichtung FR konvergierenden Anordnung einen gemeinsamen Schnittpunkt auf, welcher als virtueller Drehpunkt 115 des Viergelenkgetriebes 107 bezeichnet wird.

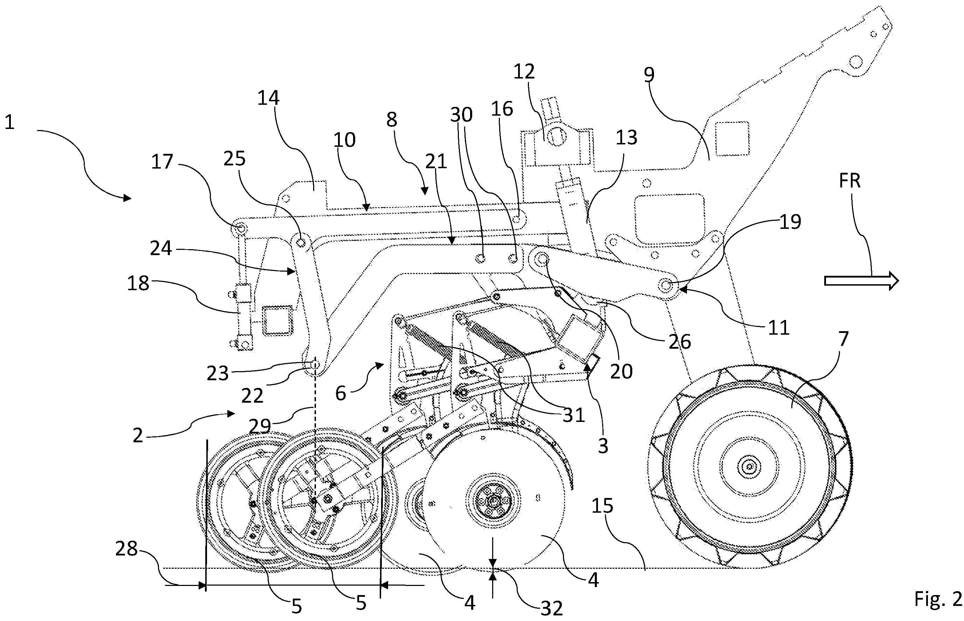

Fig. 2 zeigt schematisch und exemplarisch eine Seitenansicht einer Bodenbearbeitungseinheit 2 eines erfindungsgemäßen landwirtschaftlichen Bodenbearbeitungsgerätes 1. Das Bodenbearbeitungsgerät 1 umfasst mehrere nebeneinander angeordnete Bodenbearbeitungseinheiten 2, die an einem Träger 3 angeordnet sind.

Das Bodenbearbeitungsgerät 1 umfasst den höhenverstellbaren Träger 3, an welchem die zumindest eine Bodenbearbeitungseinheit 2 angeordnet ist. Die Bodenbearbeitungseinheit 2 weist ein Bodenbearbeitungswerkzeug 4 sowie ein zum Bodenbearbeitungswerkzeug 4 benachbart angeordnetes Tiefenführungsmittel 5 auf. Die Bodenbearbeitungseinheit 2 ist mittels eines Viergelenkgetriebes 6 an dem Träger 3 angeordnet. Weiterhin kann eine einer Bodenkontur folgende Rolle oder Walze der zumindest einen Bodenbearbeitungseinheit 2 vor- oder nachgeordnet sein. Im dargestellten Ausführungsbeispiel ist eine Packerwalze 7 der Bodenbearbeitungseinheit 2 in Fahrtrichtung FR gesehen vorangestellt.

Das Bodenbearbeitungswerkzeug 4 ist im dargestellten Ausführungsbeispiel als Säschar, insbesondere als Doppelscheibenschar ausgeführt. Das Bodenbearbeitungswerkzeug 4 kann beispielsweise auch als Hackwerkzeug ausgeführt sein.

Das Tiefenführungsmittel 5 ist hier und vorzugsweise als Tiefenführungsrolle ausgeführt. Das Tiefenführungsmittel 5 kann beispielsweise auch als Stützrad, Schleifkufe oder dergleichen ausgeführt sein.

Der Träger 3 ist mittels eines Lenkergetriebes 8 an einem Rahmen 9 oder einem Behälter für Saatgut und/oder Dünger des Bodenbearbeitungsgerätes 1 angelenkt. Das Lenkergetriebe 8 umfasst einen Oberlenker 10 und einen Unterlenker 11.

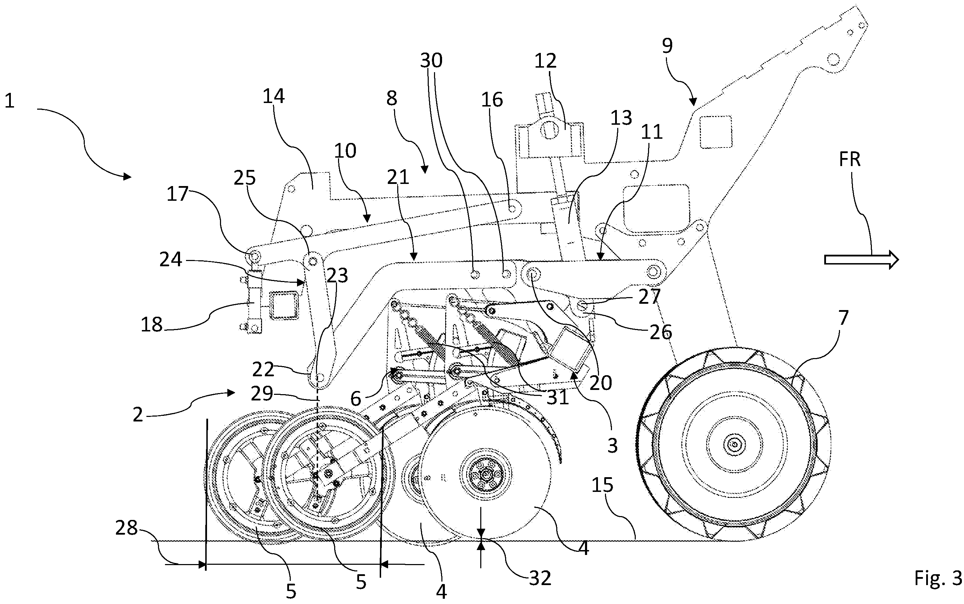

An einem oberhalb des Trägers 3 ausgebildeten Rahmensegment 12 des Rahmens 9 ist ein Einstellmittel 13 angeordnet. Das Einstellmittel 13 ist mit einem trägerseitigen Abschnitt 26 in einem Gelenkpunkt 27 angelenkt, wie in Fig. 3 dargestellt. Das Einstellmittel 13 ist hier und vorzugsweise als Linearaktor ausgeführt. Hierzu kann das Einstellmittel 13 als Hydraulikzylinder, Spindel, Spindelmotor oder Linearmotor ausgeführt sein. Durch Betätigung des Einstellmittels 13 lässt sich eine Eingriffstiefe 32 der Bodenbearbeitungswerkzeuge 4, im Fall des als Drillmaschine ausgeführten Bodenbearbeitungsgerätes 1 die Sätiefe, verstellen. Zusätzlich kann durch die Betätigung des Einstellmittels 13 ein von den Bodenbearbeitungswerkzeugen 4 ausgeübter Druck auf den Boden 15 verändert werden.

Der Rahmen 9 weist ein sich entgegen der Fahrtrichtung FR erstreckendes Rahmenelement 14 auf, welches im Wesentlichen parallel zum Boden 15 verläuft. An dem Rahmenelement 14 ist ein Ende des Oberlenkers 10 im Gelenkpunkt 16 schwenkbar angelenkt. Mit seinem gegenüberliegenden Ende ist der Oberlenker 10 im Gelenkpunkt 17 an einem Einstellmittel 18 angelenkt. Das Einstellmittel 18 ist ortsfest an dem Rahmenelement 14 angeordnet. Das Einstellmittel 18 ist hier und vorzugsweise als Linearaktor ausgeführt. Hierzu kann das Einstellmittel 18 als Hydraulikzylinder oder Linearmotor ausgeführt sein. Durch Betätigung des Einstellmittels 18 lässt sich der Oberlenker 10 um seinen rahmenseitigen Gelenkpunkt 16 verschwenken. Das Einstellmittel 18 kann dazu dienen, im Zusammenwirken mit dem Einstellmittel 13, den von den Bodenbearbeitungswerkzeugen 4 auf den Boden ausgeübten Druck zu verändern. Zusätzlich oder alternativ kann durch die Betätigung des Einstellmittels 18 die Eingriffstiefe 32 der Bodenbearbeitungswerkzeuge 4 verändert werden.

Der Unterlenker 11 ist mit einem rahmenseitigen Ende im Gelenkpunkt 19 am Rahmen 9 schwenkbar angelenkt. Mit seinem trägerseitigen Ende ist der Unterlenker 11 im Gelenkpunkt 20 am Träger 3 angelenkt. An dem Träger 3 ist ein Lenker 21 angeordnet, welcher sich entgegen der Fahrtrichtung FR abschnittsweise in Richtung des Tiefenführungsmittels 5 erstreckt. Der Lenker 21 ist mit seinem trägerseitigen Ende ortsfest am Träger 3 angeordnet. Hierzu kann der Lenker 21 mit Schraubverbindungen 30 an dem Träger 3 befestigt sein. An seinem freien Ende 22 weist der Lenker 21 einen Gelenkpunkt 23 auf.

Der Gelenkpunkt 23 des Lenkers 21 liegt in einem Aufstandsbereich 28 oberhalb der Tiefenführungsmittel 5. Als Aufstandsbereich 28 ist der Bereich des Bodens 15 bezeichnet, welcher von dem Tiefenführungsmittel 5 in Fahrtrichtung FR gesehen abgedeckt ist. Zur Veranschaulichung der Lage des Gelenkpunktes 23 des Lenkers 21 ist eine strichlinierte Hilfslinie 29 eingezeichnet, welche, durch den Gelenkpunkt 23 verlaufend, sich senkrecht zum Boden 15 erstreckt und sich im Aufstandsbereiche 28 befindet. An den Gelenkpunkt 23 ist ein Koppelelement 24 angelenkt, welches in einem Gelenkpunkt 25 an dem Oberlenker 10 angelenkt ist. Das Koppelelement 24 ist hier und vorzugsweise mit dem rahmenseitigen Ende in dem oberhalb des Gelenkpunktes 23 des Lenkers 21 beabstandet angeordneten Gelenkpunkt 25 des Oberlenkers 10 angelenkt. Der Gelenkpunkt 25 ist relativ zu dem am Lenker 21 angeordneten Gelenkpunkt 23 ortsfest. Das Koppelelement 24 ist hier und vorzugsweise als 2-Punktlenker ausgeführt.

Da ein singulärer Drehpunkt hinter dem zumindest einen Bodenbearbeitungswerkzeug 4 eine geschobene Anordnung ergeben würde, ist das Koppelelement 24 vorgesehen. Das Koppelelement 24 verbindet den im Aufstandsbereich 28 des Tiefenführungsmittels 5 liegenden Gelenkpunkt 23 mit dem oberhalb des Gelenkpunktes 23 des Lenkers 21 beabstandet angeordneten Gelenkpunkt 25, welcher relativ zu dem am Lenker 21 angeordneten Gelenkpunkt 23 ortsfest ist. Das Koppelelement 24 nimmt dabei nur vertikale Kräfte auf.

Eine Verstellung des Oberlenkers 10 durch das Verstellmittel 18 bewirkt eine Betätigung des Lenkergetriebes 8.

Das Viergelenkgetriebe 6 kann Energiespeicher, hier und vorzugsweise Federn 31 aufweisen. Die Federn 31 sind eine nach unten gerichtete Kraft auf das Bodenbearbeitungswerkzeug 4 und das Tiefenführungsmittel 5 ausübend angeordnet. Dadurch kann die vom Bodenbearbeitungswerkzeug 4 und dem Tiefenführungsmittel 5 ausgeübte Druckbelastung beeinflusst werden. Die Federkraft bzw. die Federvorspannung lässt sich einfach durch Verändern der Federlänge umstellen oder aber durch ein einfaches Umhängen der Federn 31, wie in Fig. 3 angedeutet.

Die Darstellung in Fig. 2 zeigt die Bodenbearbeitungseinheit 2 in einer durch die Einstellmittel 13, 18 vorgegebenen beispielhaften Arbeitsposition, in der die Bodenbearbeitungswerkzeuge 4 eine geringe Eingriffstiefe 32 aufweisen und das Tiefenführungsmittel 5 einen geringen Druck auf den Boden 15 ausübt.

In Fig. 3 ist schematisch und exemplarisch eine Seitenansicht der Bodenbearbeitungseinheit 2 gemäß Fig. 2 in einer abweichenden Arbeitsposition dargestellt. In der dargestellten Arbeitsposition weist das Bodenbearbeitungswerkzeug 4 weiterhin eine geringe Eingriffstiefe 32 auf. Jedoch ist der durch das Tiefenführungsmittel 5 auf den Boden 15 ausgeübte Druck erhöht. Dies wird dadurch erreicht, dass das Einstellmittel 18 vollständig eingefahren wird, so dass der Oberlenker 10 um seinen rahmenseitigen Gelenkpunkt 16 in Richtung Boden 15 verschwenkt wird. Dabei bleibt die räumliche Lage des sich auf einer Kreisbahn bewegenden Gelenkpunktes 23 innerhalb des Aufstandsbereiches 28 im Wesentlichen unverändert. Das Einstellmittel 13 wird in der Weise nachgeführt, dass sich die Eingriffstiefe 32 gegenüber der in Fig. 2 dargestellten Arbeitsposition nicht verändert. Der Unterlenker 11 und der Lenker 21 werden durch das Einstellmittel 13 in eine annähernd in horizontaler Richtung fluchtende Lage zueinander überführt.

Durch das Einfahren des Verstellmittels 18 wird der Oberlenker 10 in Richtung Boden 15 verschwenkt. Das Koppelelement 24 überträgt diese Bewegung in vertikaler Richtung auf den Lenker 21. Der am Träger 3 befestigte Lenker 21 bewegt den Träger 3 entsprechend in Richtung des Bodens 15.

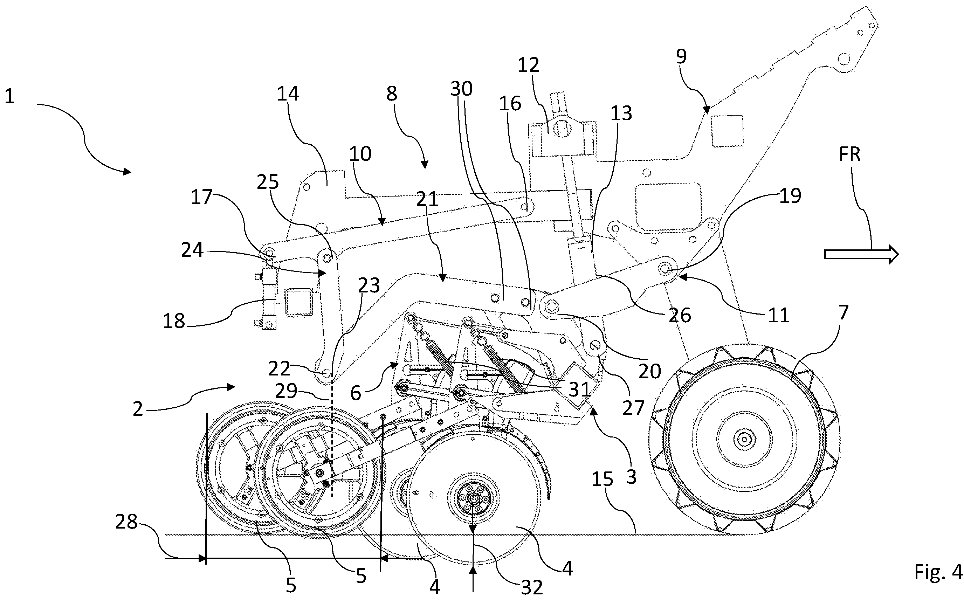

In Fig. 4 ist schematisch und exemplarisch eine Seitenansicht der Bodenbearbeitungseinheit gemäß Fig. 3 in einer hiervon weiter abweichenden Arbeitsposition dargestellt. Im Unterschied zu der in Fig. 3 dargestellten Arbeitsposition ist in der Arbeitsposition gemäß Fig. 4 das Einstellmittel 13 vollständig ausgefahren, so dass sich zusätzlich eine Änderung der Eindringtiefe der Bodenbearbeitungswerkzeuge 4 einstellt. Die Darstellung in Fig. 4 zeigt die Bodenbearbeitungseinheit 2 in einer durch die Einstellmittel 13, 18 vorgegebenen Arbeitsposition, in der die Bodenbearbeitungswerkzeuge 4 eine höhere Eingriffstiefe 32 aufweisen und das Tiefenführungsmittel 5 einen höheren Druck auf den Boden 15 ausübt.

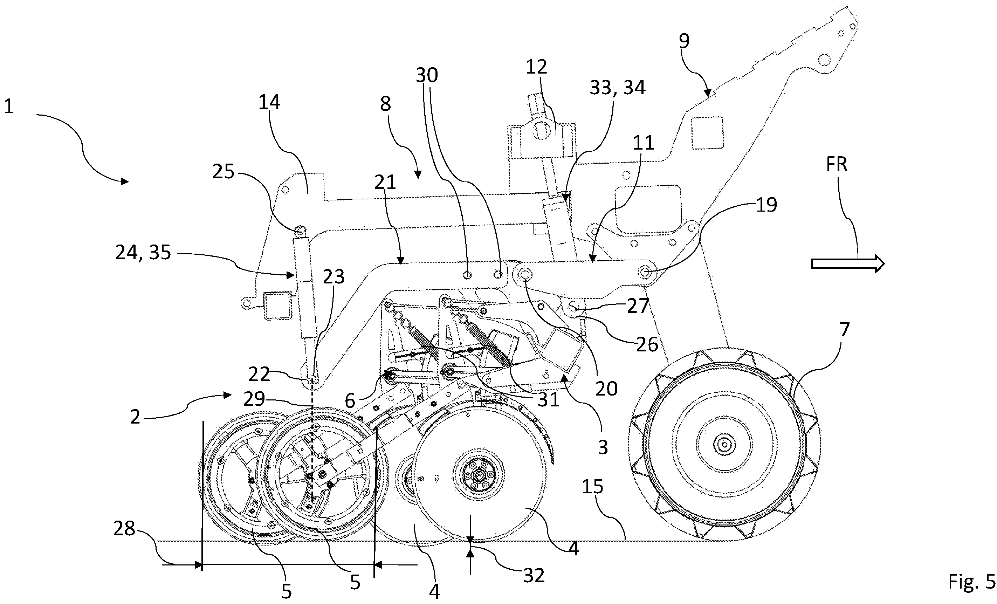

Die Darstellung in Fig. 5 zeigt schematisch und exemplarisch eine Seitenansicht einer weiteren Ausführungsform der Bodenbearbeitungseinheit 2. Der generelle Aufbau entspricht dem der in den Fig. 2 bis 4 dargestellten Bodenbearbeitungseinheit 2. Es werden nachfolgend nur die bestehenden Unterschiede der in Fig. 5 dargestellten weiteren Ausführungsform der Bodenbearbeitungseinheit 2 erläutert.

Ein erster Unterschied besteht darin, dass anstelle des am Rahmen 9 angelenkten separaten Oberlenkers 10 des Lenkergetriebes 8 ein als Vertikallenker 34 ausgeführter Oberlenker 33 vorgesehen ist. Der Oberlenker 33 bzw. Vertikallenker 34 kann dabei mit der Ausführung des Einstellmittels 13 identisch sein. Der Vertikallenker 34 ist längenveränderlich ausgeführt. Insbesondere kann der Vertikallenker 34 als Linearaktor, beispielsweise als Zylinder oder Spindel, ausgeführt sein. D.h. das Einstellmittel 13 übernimmt zusätzlich die Funktion des Oberlenkers 33 des Lenkergetriebes 8. Der Oberlenker 33 ist, im Unterschied zum Oberlenker 10 gemäß der weiter oben beschriebenen Ausführungsform, an dem Rahmensegment 12 des Rahmens 9 befestigt, welcher oberhalb des Trägers 3 ausgebildet ist. Der Oberlenker 33 ist mit seinem trägerseitigen Abschnitt 26 in dem Gelenkpunkt 27 am Träger 3 angelenkt.

Das Koppelelement 24 ist gemäß dieser Ausführungsform als ein weiterer Unterschied längenveränderlich ausgeführt, beispielsweise als Hydraulikzylinder 35. Das Koppelelement 24 ist hier und vorzugsweise mit dem rahmenseitigen Ende in einem oberhalb des Gelenkpunktes 23 des Lenkers 21 beabstandet angeordneten Gelenkpunkt 36 an dem Rahmenelement 14 angelenkt. Der Gelenkpunkt 36 ist relativ zu dem am Lenker 21 angeordneten Gelenkpunkt 23 ortsfest. Im Unterschied zum gegenüber dem Rahmen 9 relativbeweglichen Gelenkpunkt 25 am Oberlenker 10 ist der Gelenkpunkt 36 ortsfest am Rahmen 9 angeordnet. Der ortsfeste Gelenkpunkt 36 ist an einem sich in den Aufstandsbereich 28 erstreckenden Abschnitt des Rahmenelementes 14 angeordnet.

Das längenveränderlich ausgeführte Koppelelement 24 kann, neben seiner weiter oben beschriebenen Funktion, zusätzlich die Funktion des Verstellmittels 18 übernehmen.

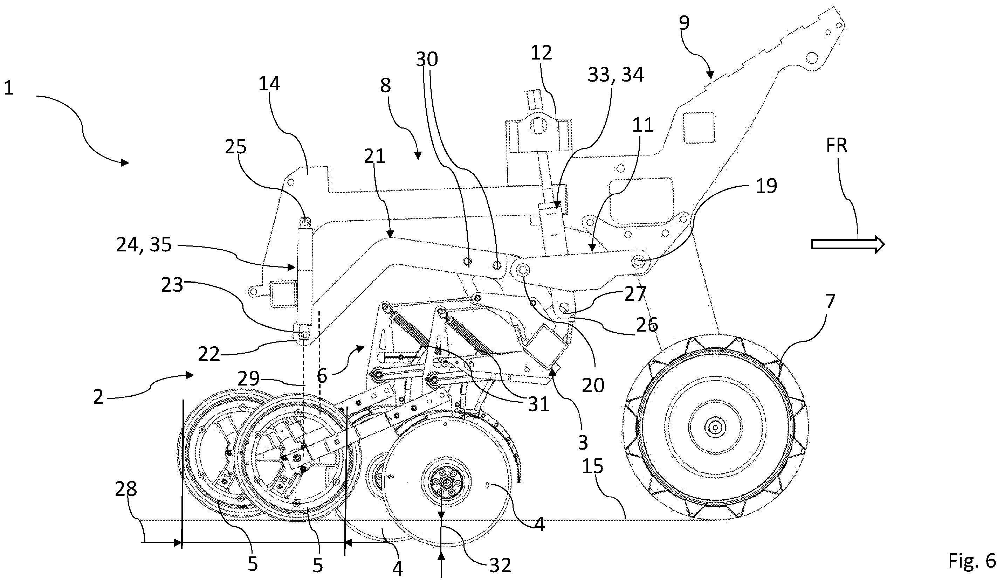

In Fig. 6 ist schematisch und exemplarisch eine Seitenansicht der Bodenbearbeitungseinheit 2 gemäß Fig. 5 in einer abweichenden Arbeitsposition dargestellt. In der dargestellten Arbeitsposition weist das Bodenbearbeitungswerkzeug 4 eine größere Eingriffstiefe 32 auf. Dies wird dadurch erreicht, dass das Koppelelement 24 vollständig eingefahren wird, so dass der Lenker 10 mit seinem Gelenkpunkt 23 in eine zum Boden 15 in vertikaler Richtung weiter beabstandete Position überführt wird. Dabei bleibt die räumliche Lage des sich auf einer Kreisbahn bewegenden Gelenkpunktes 23 innerhalb des Aufstandsbereiches 28 im Wesentlichen unverändert. Der als Verstellmittel ausgeführte Vertikallenker 34 wird durch partielles Ausfahren in der Weise nachgeführt, dass sich die Eingriffstiefe 32 gegenüber der in Fig. 5 dargestellten Arbeitsposition der Bodenbearbeitungseinheit 2 erhöht. Der Unterlenker 11 wird durch den Verstellzylinder 34 in eine zur Horizontalen geneigte Lage überführt. Der Träger 3 wird durch den Verstellzylinder 34 zur Erhöhung der Eingriffstiefe 32 in vertikaler Richtung in eine zum Boden 15 geringer beabstandete Position überführt.

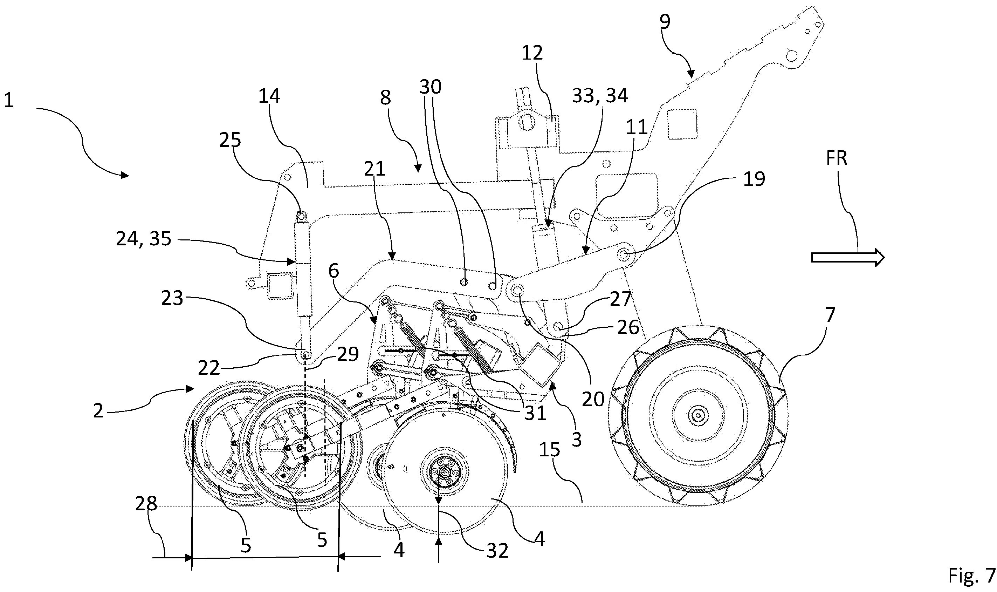

Die Darstellung in Fig. 7 zeigt schematisch und exemplarisch eine Seitenansicht der Bodenbearbeitungseinheit 2 gemäß Fig. 6 in einer hiervon weiter abweichenden Arbeitsposition. Das als Verstellzylinder 34 ausgeführte Verstellmittel ist vollständig ausgefahren dargestellt, was der maximalen Eingriffstiefe 32 entspricht. Zudem ist das Koppelelement 24 vollständig ausgefahren, wodurch das Tiefenführungsmittel 5 einen höheren Druck auf den Boden 15 ausübt.

Wesentlich ist bei den erfindungsgemäßen Ausführungsformen, dass sich die Position des Gelenkpunktes 23, in welchem der Lenker 21 und das Koppelelement 24 miteinander gelenkig verbunden sind, stets im Aufstandsbereich 28 verbleibt. Durch die einander im Wesentlichen überlappende Anordnung des Lenkergetriebes 8 und des darunterliegenden Viergelenkgetriebes 6 auf am Rahmen 9 sowie der Erstreckung entgegen der Fahrtrichtung FR hinter der Packerwalze 7 wird gegenüber dem Stand der Technik eine Bauraumoptimierung erreicht. Zugleich ist eine einfache, komfortable und präzise Einstellung der Bodenbearbeitungseinheit 2 möglich. Sowohl die Eingriffstiefe 43 als auch der auf den Boden 15 auszuübende Druck lassen sich komfortable und präzise einstellen.

**Bezugszeichenliste**

| | | | |
|---|---|---|---|
| 1 | Bodenbearbeitungsgerät | 34 | Vertikallenker |
| 2 | Bodenbearbeitungseinheit | 35 | Hydraulikzylinder |
| 3 | Träger | 36 | Gelenkpunkt |
| 4 | Bodenbearbeitungswerkzeug | FR | Fahrtrichtung |
| 5 | Tiefenführungsmittel | 101 | Bodenbearbeitungsgerät |
| 6 | Viergelenkgetriebe | 102 | Behälter |
| 7 | Packerwalze | 103 | Rahmen |
| 8 | Lenkergetriebe | 104 | Bodenbearbeitungswerkzeug |
| 9 | Rahmen | 105 | Tiefenführungsmittel |
| 10 | Oberlenker | 106 | Bodenbearbeitungseinheit |
| 11 | Unterlenker | 107 | Viergelenkgetriebe |
| 12 | Rahmensegment | 108 | Lenker |
| 13 | Einstellmittel | 109 | Träger |
| 14 | Rahmenelement | 110 | Lenkergetriebe |
| 15 | Boden | 111 | Oberlenker |
| 16 | Gelenkpunkt | 112 | Unterlenker |
| 17 | Gelenkpunkt | 113 | Gelenkpunkt |
| 18 | Einstellmittel | 114 | Hilfslinie |
| 19 | Gelenkpunkt | 115 | Virtueller Drehpunkt |
| 20 | Gelenkpunkt | | |
| 21 | Lenker | | |
| 22 | Freies Ende von 21 | | |
| 23 | Gelenkpunkt | | |
| 24 | Koppelelement | | |
| 25 | Gelenkpunkt | | |
| 26 | Abschnitt | | |
| 27 | Gelenkpunkt | | |
| 28 | Aufstandsbereich | | |
| 29 | Hilfslinie | | |
| 30 | Schraubverbindung | | |
| 31 | Feder | | |
| 32 | Eingriffstiefe | | |
| 33 | Oberlenker | | |

## Patentansprüche

1. Landwirtschaftliches Bodenbearbeitungsgerät (1), umfassend einen höhenverstellbaren Träger (3), an welchem zumindest eine Bodenbearbeitungseinheit (2), welche ein Bodenbearbeitungswerkzeug (4) sowie ein zum Bodenbearbeitungswerkzeug (4) benachbart angeordnetes Tiefenführungsmittel (5) aufweist, mittels eines Viergelenkgetriebes (6) angeordnet ist, wobei der Träger (3) mittels eines einen Oberlenker (10, 33) und einen Unterlenker (11) umfassenden Lenkergetriebes (8) an einem Rahmen (9) des Bodenbearbeitungsgerätes (1) angelenkt ist, **dadurch gekennzeichnet, dass** am Träger (3) ein Lenker (21) angeordnet ist, welcher sich in Richtung des Tiefenführungsmittels (5) erstreckt, wobei der Lenker (21) an seinem freien Ende (22) einen im Aufstandsbereich (28) des Tiefenführungsmittels (5) liegenden Gelenkpunkt (23) aufweist, in dem ein Koppelelement (24) mit einem Ende angelenkt ist, wobei das Koppelelement (24) mit seinem anderen Ende in einem oberhalb des Gelenkpunktes (23) des Lenkers (21) beabstandet angeordneten Gelenkpunkt (25, 36) angelenkt ist, welcher relativ zu dem am Lenker (21) angeordneten Gelenkpunkt (23) ortsfest ist.

2. Landwirtschaftliches Bodenbearbeitungsgerät (1) nach Anspruch 1, **dadurch gekennzeichnet, dass** der Oberlenker (10) mit einem Ende am Rahmen (9) angelenkt und sich mit seinem gegenüberliegenden Ende innerhalb des Aufstandsbereich (28) sich bis oberhalb des Tiefenführungsmittels (5) erstreckt, und dass der Lenker (21) mit seinem rahmenseitigen Ende am Träger (3) drehfest angeordnet ist.

3. Landwirtschaftliches Bodenbearbeitungsgerät (1) nach Anspruch 2, **dadurch gekennzeichnet, dass** der relativ zu dem am Lenker (21) angeordneten Gelenkpunkt (23) ortsfeste Gelenkpunkt (25) am Oberlenker (10) angeordnet ist.

4. Landwirtschaftliches Bodenbearbeitungsgerät (1) nach Anspruch 1, **dadurch gekennzeichnet, dass** der Oberlenker (33) als Vertikallenker (34) ausgeführt, welcher mit einem Ende ortsfest am Rahmen (9) angeordnet und mit seinem gegenüberliegenden Ende in einem Gelenkpunkt (27) am Träger (3) angelenkt ist.

5. Landwirtschaftliches Bodenbearbeitungsgerät (1) nach Anspruch 2, **dadurch gekennzeichnet, dass** der relativ zu dem am Lenker (21) angeordneten Gelenkpunkt (23) ortsfeste Gelenkpunkt (36) an einem sich in den Aufstandsbereich (28) erstreckenden Abschnitt des Rahmens (9) angeordnet ist.

6. Landwirtschaftliches Bodenbearbeitungsgerät (1) nach Anspruch 4 oder 5, **dadurch gekennzeichnet, dass** der als Vertikallenker (34) ausgeführte Oberlenker (33) zur Einstellung einer Eingriffstiefe (32) des Bodenbearbeitungswerkzeuges (4) eingerichtet ist.

7. Landwirtschaftliches Bodenbearbeitungsgerät (1) nach einem der Ansprüche 1 bis 6, **dadurch gekennzeichnet, dass** der Unterlenker (11) einen rahmenseitigen Gelenkpunkt (19) und einen trägerseitigen Gelenkpunkt (20) aufweist.

8. Landwirtschaftliches Bodenbearbeitungsgerät (1) nach einem der Ansprüche 1 bis 7, **dadurch gekennzeichnet, dass** zumindest ein Einstellmittel (13, 18) vorgesehen ist, welches zur Einstellung einer Eingriffstiefe (32) des Bodenbearbeitungswerkzeuges (4) und/oder zur Einstellung eines vom Bodenbearbeitungswerkzeug (4) auf einen Boden (15) auszuübenden Drucks eingerichtet ist.

9. Landwirtschaftliches Bodenbearbeitungsgerät (1) nach Anspruch 8, **dadurch gekennzeichnet, dass** das zumindest eine Einstellmittel (13, 18) als Linearaktor ausgeführt ist.

10. Landwirtschaftliches Bodenbearbeitungsgerät (1) nach einem der vorangehenden Ansprüche, **dadurch gekennzeichnet, dass** das Koppelelement (24) längenveränderlich ausgeführt ist.

11. Landwirtschaftliches Bodenbearbeitungsgerät (1) nach einem der vorangehenden Ansprüche, **dadurch gekennzeichnet, dass** in den Gelenkpunkten (19, 20, 23, 25, 27, 36) Gelenke mit zumindest einem Freiheitsgrad angeordnet sind.

12. Landwirtschaftliches Bodenbearbeitungsgerät (1) nach Anspruch 11, **dadurch gekennzeichnet, dass** die in den Gelenkpunkten (19, 20, 23, 25, 27, 36) schwenkbar miteinander verbundenen Komponenten des Viergelenkgetriebes (6) und des Lenkergetriebes (8) jeweils voneinander lösbar ausgeführt sind.

## Claims

1. Agricultural soil-working implement (1), comprising a height-adjustable carrier (3), on which at least one soil-working unit (2) - comprising a soil-working implement (4) and a depth-control means (5) arranged adjacent to the soil-working implement (4) - is mounted by means of a four-bar linkage (6), wherein the carrier (3) is articulated to a frame (9) of the soil cultivation implement (1) by means of a link mechanism (8) comprising an upper link (10, 33) and a lower link (11), **characterised in that** a link (21) is arranged on the carrier (3) has a link (21) arranged on it, which extends in the direction of the depth-guiding means (5), wherein the link (21) has, at its free end (22), a pivot point (23) situated in the contact area (28) of the depth-guiding means (5), at which a coupling element (24) is articulated at one end, the coupling element (24) being articulated at its other end to a pivot point (25, 36) spaced above the pivot point (23) of the link (21), which pivot point (25, 36) is fixed in position relative to the pivot point (23) arranged on the link (21).

2. Agricultural soil-working implement (1) as per claim 1, **characterised in that** the upper link (10) is articulated at one end to the frame (9) and extends with its opposite end within the contact area (28) up to a point above the depth control means (5), and **in that** the link (21) is fixed in rotation at its frame-side end to the support (3).

3. Agricultural soil cultivation implement (1) according to claim 2, **characterised in that** the fixed pivot point (25), which is fixed relative to the pivot point (23) arranged on the link (21), is arranged on the upper link (10).

4. Agricultural soil-working implement (1) according to claim 1, **characterised in that** the upper link (33) is designed as a vertical link (34), which is fixed at one end to the frame (9) and articulated at its opposite end at a pivot point (27) on the support (3).

5. Agricultural soil-working implement (1) according to claim 2, **characterised in that** the pivot point (36), which is fixed relative to the pivot point (23) arranged on the link (21), is arranged on a section of the frame (9) extending into the contact area (28) .

6. An agricultural soil-working implement (1) according to claim 4 or 5, **characterised in that** the upper link (33), designed as a vertical link (34), is arranged to adjust the working depth (32) of the soil-working tool (4).

7. Agricultural soil cultivation implement (1) according to any one of claims 1 to 6, **characterised in that** the lower link (11) has a pivot point (19) on the frame side and a pivot point (20) on the beam side.

8. Agricultural soil-working implement (1) according to any one of claims 1 to 7, **characterised in that** at least one adjustment means (13, 18) is provided, which is arranged to adjust a penetration depth (32) of the soil-working implement (4) and/or to adjust a pressure to be exerted by the soil-working implement (4) onto a soil surface (15).

9. Agricultural soil-working implement (1) according to claim 8, **characterised in that** the at least one adjustment means (13, 18) is designed as a linear actuator.

10. An agricultural soil-working implement (1) according to one of the preceding claims, **characterised in that** the coupling element (24) is designed to be length-adjustable.

11. An agricultural soil-working implement (1) according to one of the preceding claims, **characterised in that** joints with at least one degree of freedom are arranged at the articulation points (19, 20, 23, 25, 27, 36).

12. Agricultural soil cultivation implement (1) according to claim 11, **characterised in that** the components of the four-bar linkage (6) and the steering linkage (8), which are pivotally connected to one another at the articulation points (19, 20, 23, 25, 27, 36), are each designed to be detachable from one another.

## Revendications

1. Machine agricole de travail du sol (1), comprenant un support réglable en hauteur (3), sur lequel est montée, au moyen d'un mécanisme à quatre articulations (6), au moins une unité de travail du sol (2) qui comporte un outil de travail du sol (4) ainsi qu'un moyen de guidage en profondeur (5) disposé à proximité de l'outil de travail du sol (4), le support (3) est articulé à un châssis (9) de l'outil de travail du sol (1) au moyen d'un mécanisme à bras (8) comprenant un bras supérieur (10, 33) et un bras inférieur (11), **caractérisé en ce que**, sur le support (3) est disposé un bras (21) qui s'étend en direction du moyen de guidage en profondeur (5), le bras (21) présentant, à son extrémité libre (22), un point d'articulation (23) situé dans la zone de contact (28) du moyen de guidage en profondeur (5), dans lequel un élément de couplage (24) est articulé par une extrémité, l'élément de couplage (24) étant articulé par son autre extrémité à un point d'articulation (25, 36) situé à distance au-dessus du point d'articulation (23) du bras de guidage (21), lequel point d'articulation est fixe par rapport au point d'articulation (23) disposé sur le bras de guidage (21).

2. Outil agricole de travail du sol (1) selon la revendication 1, **caractérisé en ce que** le bras supérieur (10) est articulé par une extrémité au châssis (9) et s'étend, par son extrémité opposée, à l'intérieur de la zone d'appui (28) jusqu'au-dessus du moyen de guidage en profondeur (5), et **en ce que** le bras (21) est monté de manière solidaire en rotation, par son extrémité côté châssis, sur le support (3).

3. Outil agricole de travail du sol (1) selon la revendication 2, **caractérisé en ce que** le point d'articulation (25), fixe par rapport au point d'articulation (23) disposé sur le bras de guidage (21), est disposé sur le bras supérieur (10).

4. Outil agricole de travail du sol (1) selon la revendication 1, **caractérisé en ce que** le bras supérieur (33) est réalisé sous la forme d'un bras vertical (34), qui est monté de manière fixe par une extrémité sur le châssis (9) et articulé par son extrémité opposée au niveau d'un point d'articulation (27) sur le support (3).

5. Outil agricole de travail du sol (1) selon la revendication 2, **caractérisé en ce que** le point d'articulation (36), fixe par rapport au point d'articulation (23) disposé sur le bras de guidage (21), est disposé sur une partie du châssis (9) s'étendant dans la zone de contact (28) .

6. Outil agricole de travail du sol (1) selon la revendication 4 ou 5, **caractérisé en ce que** le bras supérieur (33), réalisé sous la forme d'un bras vertical (34), est agencé pour régler une profondeur de pénétration (32) de l'outil de travail du sol (4).

7. Outil agricole de travail du sol (1) selon l'une des revendications 1 à 6, **caractérisé en ce que** le bras inférieur (11) comporte un point d'articulation (19) côté châssis et un point d'articulation (20) côté support.

8. Outil agricole de travail du sol (1) selon l'une des revendications 1 à 7, **caractérisé en ce qu'**au moins un moyen de réglage (13, 18) est prévu, lequel est agencé pour régler une profondeur de pénétration (32) de l'outil de travail du sol (4) et/ou pour régler une pression à exercer par l'outil de travail du sol (4) sur un sol (15).

9. Outil agricole de travail du sol (1) selon la revendication 8, **caractérisé en ce que** ledit au moins un moyen de réglage (13, 18) est réalisé sous la forme d'un actionneur linéaire.

10. Outil agricole de travail du sol (1) selon l'une des revendications précédentes, **caractérisé en ce que** l'élément de couplage (24) est de longueur variable.

11. Outil agricole de travail du sol (1) selon l'une des revendications précédentes, **caractérisé en ce que** des articulations présentant au moins un degré de liberté sont disposées au niveau des points d'articulation (19, 20, 23, 25, 27, 36).

12. Outil agricole de travail du sol (1) selon la revendication 11, **caractérisé en ce que** les composants du mécanisme à quatre articulations (6) et du mécanisme de bras de levier (8), reliés entre eux de manière pivotante au niveau des points d'articulation (19, 20, 23, 25, 27, 36), sont chacun conçus de manière à pouvoir être détachés les uns des autres.
